# EUROPÄISCHE PATENTSCHRIFT

(11) **EP 0 558 931 B1**
(45) Veröffentlichungstag und Bekanntmachung des Hinweises auf die Patenterteilung: **22.05.1996**
(21) Anmeldenummer: 93101485.6
(22) Anmeldetag: 30.01.1993
(51) Int. Cl.: B29C 45/28

(54) **Nadelverschlussdüse mit Kolbenantrieb**
Needle valve nozzle with piston drive
Buse à fermeture à aiguille avec entraînement à piston

(30) Priorität: 29.02.1992 DE 4206319
(43) Veröffentlichungstag der Anmeldung: 08.09.1993
(73) Patentinhaber: Männer, Otto, D-79353 Bahlingen (DE)
(72) Erfinder: Männer, Otto, D-79353 Bahlingen (DE)
(74) Vertreter: Schmitt, Hans, Dipl.-Ing.

(56) Entgegenhaltungen:
- EP-A- 0 153 592
- DE-A- 2 004 212
- DE-A- 3 249 486
- DE-A- 3 733 363
- DE-U- 8 902 781
- GB-A- 2 098 535
- US-A- 2 983 256

## Beschreibung

Die Erfindung betrifft eine Nadelverschluß-Düse mit Kolbenantrieb für Spritzgießformen, insbesondere für Mehrfachformen, bei welcher in dem Zuführweg für den flüssigen Gießwerkstoff im Bereich des Übertrittes in die Spritzgießform eine axial in Schließstellung und in Öffnungsstellung hin- und herbewegbare Verschlußnadel vorgesehen und an dem dem Dichtbereich entgegengesetzten Nadelende eine Kolbenstange eines unmittelbar koaxial zu der Verschlußnadel bewegbaren ersten Antriebskolbens für die angeordnet ist und bei der koaxial zu dem ersten Antriebskolben ein zweiter Antriebskolben ebenfalls auf die Verschlußnadel wirkend vorgesehen ist, wobei der Kolbenantrieb der Verschlußnadel mit Preßluft geringen Druckes von zum Beispiel etwa vier bis sechs bar beaufschlagbar ist.

Eine derartige Nadelverschluß-Düse mit einem Mehrfach-Kolbenantrieb ist aus der DE-PS 32 49 486 bekannt. Dabei ist vorgesehen, daß der erste Kolben mit seiner Kolbenstange auf den zweiten Antriebskolben wirkt und jeweils die Kolbenstange in der Durchtrittsöffnung des Zylindergehäuses zu dem nächsten Kolben hin beziehungsweise zu der Verschlußnadel hin geführt ist. Aus Platzgründen können diese Führungen der einzelnen Kolbenstangen in axialer Richtung nicht groß genug sein, um ein seitliches Kippen oder Verkanten der aus Kolben und Kolbenstange bestehenden Einheit mit genügender Sicherheit auszuschließen. Falls es zu einem solchen Kippen kommt, kann sich der Kolben in seinem Zylinder verkanten, so daß dann unter Umständen der Druck des Mediums, wenn es sich um einen relativ geringen Preßluftdruck handelt, nicht mehr ausreicht, um an dem Verschlußende der Verschlußnadel die erforderliche Schließkraft zu erzeugen.

Ein druckmittelbetätigbarer Arbeitszylinder mit mehreren Kolben, die an einer gemeinsamen Kolbenstange befestigt sind, und der eine Querabstützung der Kolbenstange durch eine Führungseinrichtung vorsieht, ist aus G 89 02 781.7 bekannt. Dieser ist jedoch nicht für Nadelverschlußdüsen vorgesehen.

Es besteht daher die Aufgabe, eine Nadelverschluß-Düse mit mehrfachem Kolbenantrieb der eingangs erwähnten Art zu schaffen, bei der ein Kippen der Kolbenstange praktisch ausgeschlossen ist, und die Verschlußnadel auf einfache Art und Weise demontiert und ersetzt werden kann.

Die Lösung dieser Aufgabe besteht darin, daß die gemeinsam auf eine Verschlußnadel wirkenden Antriebskolben an einer gemeinsamen, durchgehenden Kolbenstange befestigt sind und daß die Kolbenstange jeweils einen Boden der die einzelnen Kolben enthaltenden, in Vorschubrichtung koaxial hintereinander angeordneten Zylinderkammern durchsetzt und in den Durchtrittsöffnungen der Böden gleitend geführt ist, und daß eine Lochung bis über den von der Nadel am weitesten entfernten Kolben hinaus führt und eine nach außen gerichtete Mündung hat, von welcher aus das Ende der Verschlußnadel erreichbar ist, und daß die Verschlußnadel durch die Lochung der Kolbenstange herausziehbar und demontierbar ist. Somit kann eine eventuell beschädigte oder verschlissene Verschlußnadel auf sehr einfache Weise durch die durchgehende Kolbenstange hindurch demontiert und durch eine neue Verschlußnadel ersetzt werden, ohne daß also die gesamte Nadelverschluß-Düse demontiert und geöffnet werden muß. Ein Auswechseln der Verschlußnadel ist also aufgrund der durchgehenden Kolbenstange ganz erheblich vereinfacht und vermindert Ausfallzeiten während solcher Reparaturarbeiten.

Die Erfindung erlaubt es, daß die Kolbenstange wenigstens so viele Gleitführungen hat, wie Antriebskolben mit ihr verbunden und Zylinderkammern für diese Antriebskolben axial hintereinander angeordnet sind. Mindestens ergeben sich also zwei Führungen für die Kolbenstange, so daß ein Verkippen praktisch ausgeschlossen ist unabhängig davon, wie genau die Kolben gearbeitet und ihrerseits in ihren Zylindern geführt sind.

Besonders zweckmäßig ist es dabei, wenn die Kolbenstange einstückig ausgebildet ist. Sie hat dadurch eine bestmögliche Eigenstabilität, die im Zusammenwirken mit mindestens zwei Gleitführungen ein derartiges Verkippen verhindert, welches zu einem Verkanten des Kolbens mit entsprechend großem Widerstand gegen das Druckmedium führen könnte.

Eine Ausgestaltung der Erfindung kann darin bestehen, daß die Kolbenstange den von der Verschlußnadel am weitesten abliegenden Kolben mit einem Überstand überragt und der Überstand in dem Zylinderdeckel oder -abschluß geführt ist. Dadurch ergibt sich eine weitere Führung, die zusätzlich oder anstelle der Führung der Kolbenstange in einem Zylinderboden auf der der Nadel zugewandten Seite vorgesehen sein kann. Auf die Weise können also beispielsweise auch drei Führungen an ein und derselben Kolbenstange für deren Stabilisierung sorgen.

Eine weitere Ausgestaltung der Erfindung zur noch besseren Verhinderung eines Verkippens oder Verkantens kann darin bestehen, daß einer der Antriebskolben, insbesondere der der Verschlußnadel am weitesten abgewandte erste Antriebskolben, mit der Kolbenstange einstückig verbunden ist. Dadurch kann auch die Führung dieses ersten Kolbens an seiner Zylinderwandung zur Stabilisierung der Führung der gesamten Antriebseinheit beitragen. Außerdem ergibt sich eine Vereinfachung der Montage, weil der Kolben nicht mit zusätzlichen Befestigungsmitteln an der Kolbenstange befestigt werden muß.

Der oder die weiteren Antriebskolben oder gegebenenfalls auch alle Antriebskolben können mit Hilfe eines Sprengringes oder eines Seegeringes an der Kolbenstange in axialer Richtung befestigt sein. Auch dies stellt eine einfache Art der Montage dar.

Besonders zweckmäßig ist es jedoch, wenn der oder die Kolben in der einen axialen Verstellrichtung an Durchmesservergrößerungen der Kolbenstange und in der entgegengesetzten Richtung an einem Sprengring oder Seegerring anliegen und einerseits zwischen der Durchmesservergrößerung der Kolbenstange und andererseits dem Ring festgelegt oder eingespannt sind. Beispielsweise kann für die Verstellung der Verschlußnadel und den ndabei auftretenden höheren Druck die Durchmesservergrößerung jeweils an der Oberseite des Kolbens wirksam sein und also die Druckkraft für den Schließvorgang von dem weiter abliegenden auf den jeweils näherliegenden Kolben übertragen, der seinerseits von der Druckluft beaufschlagt wird, während in Gegenrichtung die Seegerringe wirksam sind, jedoch kann auch eine umgekehrte Anordnung vorgesehen sein, bei welcher die Bereiche größeren Durchmessers der Kolbenstange von der Nadel weiter abliegen, also die Kolben bei der Rückstellung auf die Durchmesservergrößerung der Kolbenstange wirken.

Für die Zufuhr des Druckmediums, insbesondere der Druckluft, können in dem Kolbengehäuse und den Zylinderwandungen jeweils an der Oberseite der Kolben mündende Kanäle vorgesehen sein. Für die Rückstellung des Kolbenantriebes können an der Unterseite der Kolben durch die Zylinderwände verlaufende Kanäle für Druckmedium oder Druckluft münden.

Eine Ausgestaltung der Erfindung von ganz erheblicher Bedeutung kann darin bestehen, daß zusätzlich zu dem ersten und dem weiteren Antriebskolben wenigstens ein dritter Antriebskolben vorgesehen ist und in einer axial hinter den übrigen Zylinderkammern angeordneten eigenen abgeschlossenen und abgedichteten Zylinderkammer mit Luftzufuhr verschiebbar und mit der Kolbenstange verbunden angeordnet ist. Dadurch kann eine noch größere Schließkraft mit einem relativ geringen Preßluft-Druck erreicht werden, so daß unter Umständen die radialen Abmessungen des Kolbenantriebes vermindert und entsprechend mehr Nadelverschluß-Düsen auf engerem Raum nebeneinander angeordnet werden können.

Ferner erlaubt die Anordnung mehrerer Antriebskolben, daß die Antriebskolben jeweils mehrere parallel zueinander angeordnete Kolbenstangen und demgemäß mehrere Verschlußnadeln gleichzeitig beaufschlagen. Dies wird vor allem auch durch die gute Führung der Kolbenstangen an mehreren Führungsstellen und damit die Verhinderung eines Verkantens oder Verkippens ermöglicht, so daß entsprechend viele kleine Spritzteile auf engstem Raum fertiggestellt werden können.

Damit die an der Kolbenstange bewirkte gute Führung sich entsprechend gut auf die Verschlußnadel auswirkt, ist es zweckmäßig, wenn das Ende der Verschlußnadel koaxial in die Lochung der Kolbenstange paßt und darin formschlüssig aber lösbar befestigt ist. Auf diese Weise kann die durch ihre gute mehrfache Führung gegen Auslenkungen gesicherte Kolbenstange dazu beitragen, daß die Verschlußnadel ihrerseits auch bei seitlicher Belastung durch einfließenden Gießwerkstoff an einer Auslenkung weitestgehend gehindert wird. Entsprechend schnell und präzise kann die Verschlußnadel trotz eventueller einseitiger Belastungen in Schließstellung verschoben werden.

Die Lochung kann zentral und konzentrisch in der Kolbenstange angeordnet sein.

Dabei kann die durch die Kolbenstange durchgehende Lochung zur Aufnahme und Demontieren der Verschlußnadel einen an ihrem der Verschlußnadel abgewandten Ende anbringbaren Verschluß, vorzugsweise einen Schraubverschluß, insbesondere eine als Verschluß dienende Schraube, aufweisen, deren nach innen gerichtete Stirnseite gleichzeitig den axialen Anschlag für das Ende der Verschlußnadel bildet. Die hin- und herbewegte Kolbenstange kann also über ihren Verschluß die Verschlußnadel in axialer Richtung mitnehmen. Wird der Verschluß geöffnet, wird die Nadel für eine Demontage zugänglich.

Dabei kann das stirnseitige Ende der Verschlußnadel eine Lochung mit Hinterschneidung oder Gewinde haben, in welche von außen her durch die Lochung der Kolbenstange ein ein Gegenstück oder Gegengewinde aufweisendes Werkzeug oder eine Zugschraube oder dergleichen einsetzbar ist, womit die Verschlußnadel in axialer Richtung durch die Kolbenstange herausziehbar ist.

Damit die Verschlußnadel durch die Rückzugsbewegung der Kolben und ihrer Kolbenstange ihrerseits in Öffnungsrichtung gelangt, kann sie in oder an der Lochung der Kolbenstange in Gebrauchsstellung derart gekuppelt sein, daß sie mit dieser rückziehbar ist. Beispielsweise könnte die Verschlußnadel innerhalb der Lochung eine Verengung mit einem Kopf oder einer Durchmesservergrößerung übergreifen und danach an die Verschlußschraube anstoßen.

Durch die Erfindung und eventuelle Ausgestaltungen entsprechend der vorstehenden Beschreibung ergibt sich eine Nadelverschluß-Düse mit einem Mehrfach-Kolbenantrieb, bei welchem einerseits ein Verkippen der Kolbenstange und damit ein Verkanten der Kolben ausgeschlossen wird und die Zahl der Antriebskolben, welche jeweils auf dieselbe Kolbenstange wirken, in einer nahezu beliebigen Weise vergrößert werden kann, um bei relativ geringem Druck des Druckmediums dennoch eine große Verschlußkraft aufbringen zu können, die unter Umständen bei Anbringung mehrerer paralleler Kolben unmittelbar an den Antriebskolben auch die gleichzeitige Bedienung mehrerer Verschlußnadeln ermöglicht. Trotzdem ist eine Lösung möglich, bei der das Auswechseln von Verschlußnadeln noch vereinfacht ist, wenn diese durch eine zentrale Lochung der Kolbenstange hindurch montiert und demontiert werden kann, was bei einzelnen Kolben mit Kolbenstangen, die jeweils aufeinander wirken hintereinandergeschaltet sind, nicht möglich ist.

Nachstehend sind Ausführungsbeispiele der Erfindung mit ihren ihr als wesentlich zugehörenden Einzelheiten anhand der Zeichnung näher beschrieben. Es zeigt in zum Teil schematisierter Darstellung:
Fig. 1 einen Längsschnitt durch eine Nadelverschluß-Düse mit ihrem Kolbenantrieb, bei welchem an einer gemeinsamen, die Verschlußnadel in einer zentralen Öffnung aufnehmenden Kolbenstange drei Kolben mit entsprechenden Zylindern vorgesehen sind, sowie
Fig. 2 einen Längsschnitt durch eine Mehrfach-Nadelverschluß-Düse, deren Verschlußnadeln jeweils von einer durchgehenden Kolbenstange beaufschlagt werden, wobei die Kolbenstangen jeweils von zwei gemeinsamen Kolben bewegt werden.

In den beiden unterschiedlichen Ausführungsbeispielen sind übereinstimmende Teile bzw. Teile, deren Funktionen einander entsprechen, mit übereinstimmenden Bezugszahlen versehen, selbst wenn die Teile unterschiedlich gestaltet sind.

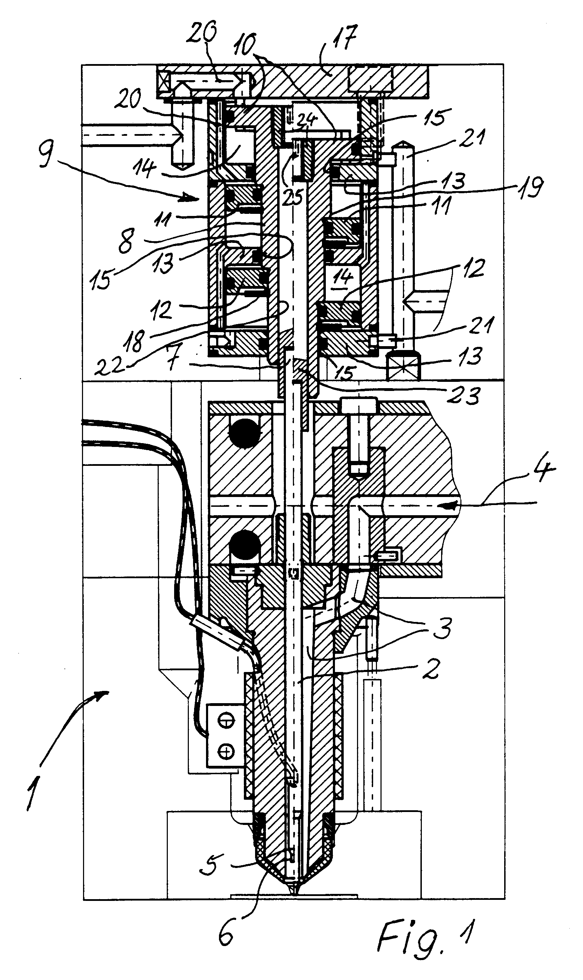

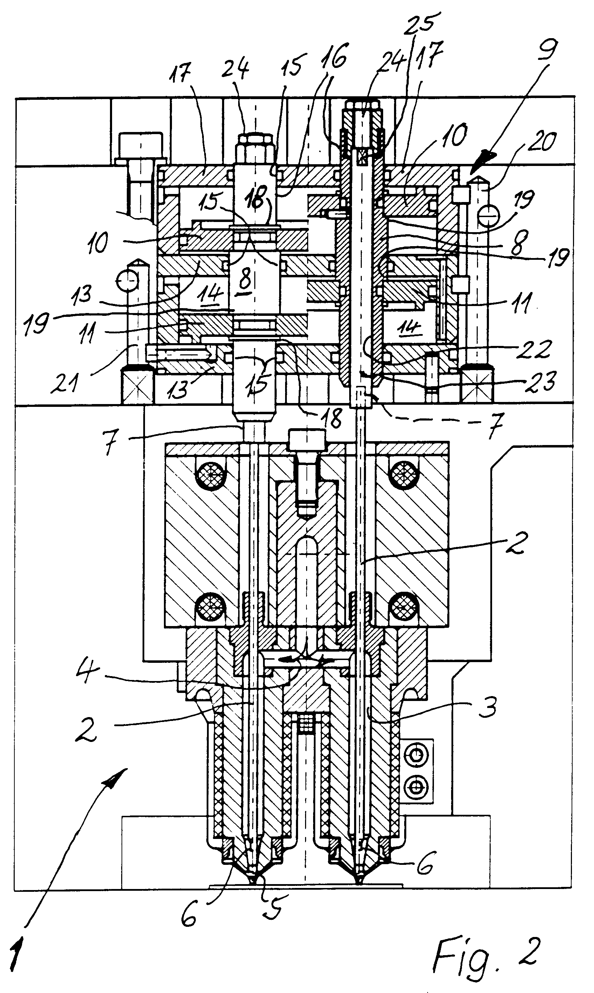

Eine im ganzen mit 1 bezeichnete Nadelverschluß-Düse, die entweder eine einzige Verschlußnadel 2 gemäß Fig.1 oder wenigstens zwei Verschlußnadeln 2 gemäß Fig.2 aufweisen kann, dient dazu, in bekannter Weise Spritzgießformen, vor allem Mehrfachformen, mit Gießwerkstoff zu füllen. Ein wesentlicher Teil der Nadelverschluß-Düse 1, im folgenden auch kurz "Düse 1" genannt, ist dabei die im Zufuhrweg 3 für den flüssigen Gießwerkstoff 4 angeordnete, aus einer Offenstellung in eine Schließstellung und zurück hin- und herbewegbare Verschlußnadel 2, die in der Zeichnung in der einen Hälfte in Offenstellung und in der anderen Hälfte des Längsschnittes in Schließstellung dargestellt ist.

An ihrem Verschlußende 5 hat die Verschlußnadel 2 einen Dichtbereich 6 verkleinerten Durchmessers gegenüber ihrem übrigen Teil.

An dem dem Dichtbereich 6 entgegengesetzten Nadelende 7 greift eine Kolbenstange 8 eines im ganzen mit 9 bezeichneten Kolbenantriebes an, der koaxial zu der Verschlußnadel 2 einen ersten Antriebskolben 10 und koaxial zu diesem ersten Antriebskolben 10 einen zweiten Antriebskolben 11 jeweils auf die Verschlußnadel 2 wirkend aufweist.

Im Ausführungsbeispiel nach Fig.1 ist sogar koaxial zu den beiden Antriebskolben 10 und 11 ein dritter Antriebskolben 12 vorgesehen. Im Ausführungsbeispiel nach Fig.2 sind hingegen nur zwei koaxial hintereinander und gleichzeitig auf die Verschlußnadel 2 wirkende Antriebskolben 10 und 11 vorhanden.

Aufgrund dieser Mehrfachanordnung von Kolben kann der Kolbenantrieb 9 der Verschlußnadel 2 mit Preßluft geringen Druckes von zum Beispiel etwa nur vier bis sechs bar oder unter Umständen sogar auch nur drei bar beaufschlagt werden und dennoch eine genügend große Schließkraft an dem Verschlußende 5 der Verschlußnadel 2 bewirken.

Damit bei diesen Bewegungen und einer durch den Gießwerkstoff 3 unter Umständen einseitigen Belastung der Verschlußnadel 2 die auf sie wirkende Kolbenstange 8 nicht gekippt und dadurch die Antriebskolben 10,11 u.12 verkantet werden und dadurch dem Luftdruck einen zu großen Widerstand entgegensetzen, ist vorgesehen, daß die gemeinsam auf die Verschlußnadel 2 wirkenden Antriebskolben 10,11;12 an einer gemeinsamen, durchgehenden Kolbenstange 8 befestigt sind und daß die Kolbenstange 8 jeweils einen Boden 13 der die einzelnen Kolben enthaltenden, in Vorschubrichtung koaxial hintereinander angeordneten Zylinderkammern 14 durchsetzt und in den Durchtrittsöffnungen 15 der Böden 13 gleitend geführt ist. Die Kolbenstange 8 hat auf diese Weise einerseits eine gute Eigenstabilität und wird andererseits an mehreren Stellen geführt, so daß sie auch bei einer seitlichen Beaufschlagung von der Verschlußnadel 2 her nicht ausgelenkt und verkippt werden kann.

In beiden Ausführungsbeispielen erkennt man, daß die Kolbenstange 8 wenigstens so viele Gleitführungen hat, wie Antriebskolben mit ihr verbunden und Zylinderkammern 14 für diese Antriebskolben axial hintereinander angeordnet sind. In Fig.1 sind drei Antriebskolben 10,11 und 12 mit entsprechenden Zylindern 14 vorgesehen und in allen Zylinderböden 13 sind entsprechende, als Gleitführungen wirkende Durchtrittsöffnungen 15 für die gemeinsame Kolbenstange 8 vorhanden.

Im Ausführungsbeispiel nach Fig.2 sind zwei Antriebskolben 10 u.11 und zwei Zylinderkammern 14 vorgesehen, deren Böden 13 ebenfalls die führenden Durchtrittsöffnungen 15 haben, wobei in diesem Falle außerdem die Kolbenstange 8 noch den von der Verschlußnadel 2 am weitesten abliegenden Kolben 10 mit einem Überstand 16 überragt und der Überstand 16 in dem Zylinderdeckel oder -abschluß 17 geführt ist, so daß in diesem Falle sogar eine Gleitführung mehr als Kolben vorhanden sind. Gegebenenfalls könnte aber in einem solchen Falle mit einer Führung mit Hilfe eines Überstandes 16 die entgegengesetzte letzte Gleitführung auch entfallen, falls beispielsweise die Verschlußnadel selbst durch den ihr am nächsten liegenden Zylinderboden 13 bis in diesen ihr am nächsten liegenden Zylinder 14 ragen sollte.

In beiden Ausführungsbeispielen erkennt man, daß die durchgehende Kolbenstange in vorteilhafter Weise dadurch realisiert ist, daß sie einstückig ausgebildet ist. Dies gibt ihr eine hohe Eigenstabilität und erlaubt es, die von den Gleitführungen ausgehenden Abstützungen und Reaktionskräfte gut aufzufangen und zu übertragen.

Dabei ist eine weitere Maßnahme zur Verbesserung der Führung und der Stabilität beim Ausführungsbeispiel nach Fig.1 vorgesehen und besteht darin, daß der der Verschlußnadel 2 am weitesten abgewandte erste Antriebskolben 10 mit der Kolbenstange 8 einstückig verbunden ist. Somit trägt auch seine Führung in seinem zugehörigen Zylinder 14 noch zur Stabilisierung des gesamten Kolbenantriebes 9 gegen Verkippen und Verkanten bei. Darüber hinaus wird die Montage vereinfacht, weil die Kolbenstange mit diesem Kolben von vorneherein verbunden ist und somit nicht mehr mittels Befestigungsmitteln zusammengefügt werden muß.

Der oder die weiteren Antriebskolben 11 oder 12 sind im Ausführungsbeispiel mit Hilfe eines Sprengringes oder Seegerringes 18 an der Kolbenstange 8 in axialer Richtung befestigt. Dabei erkennt man, daß die Kolben 10,11 u.12 in der einen axialen Verstellrichtung an Durchmesservergrößerungen 19 der Kolbenstange und in der entgegengesetzten Richtung jeweils an dem Sprengring oder Seegerring 18 anliegen, also zwischen der Durchmesservergrößerung 19 und dem erwähnten Befestigungsring 18 festgelegt oder eingespannt sind. Vor allem in Fig.1 erkennt man deutlich, daß die Kolbenstange in unmittelbarer Nachbarschaft zu dem von der Verschlußnadel 2 am weitesten entfernten Kolben 10 einen größeren Durchmesser hat und dann in Richtung zur Verschlußnadel 2 hin an jedem weiteren Kolben in ihrem Durchmesser um die erwähnte Durchmesservergrößerung 19 abnimmt. Diese Absätze oder Durchmesservergrößerungen 19 könnten aber auch in umgekehrter Reihenfolge vorgesehen sein, während Fig.2 eine Lösung zeigt, bei welcher zwischen den beiden Kolben 10 u.11 eine Durchmesservergrößerung 19 der Kolbenstange 8 vorgesehen ist, an der die beiden Kolben jeweils von beiden Seiten her anliegen, so daß sie auf den von dieser mittleren Durchmesservergrößerung 19 abgewandten Seite jeweils mit einem Seegerring 18 zu fixieren sind.

Vor allem in Fig.1, aber teilweise auch in Fig.2 erkennt man, daß für die Zufuhr des Druckmediums, also der Luft geringen Druckes, in dem Kolbengehäuse und den Zylinderwandungen jeweils an der Oberseite der Kolben mündende Kanäle 20 vorgesehen sind. Für die Rückstellung des Kolbenantriebs 9 sind entsprechende, an der Unterseite der Kolben durch die Zylinderwände verlaufende Kanäle 21 für Druckluft angeordnet, wobei diese zweckmäßigerweise jeweils nahe dem Boden 13 münden, um den in Schließstellung der Verschlußnadel 2 faßt an diesem Boden 13 anliegenden Kolben wieder zurückverstellen zu können.

Während bei Fig.1 ein Kolbenantrieb 9 mit insgesamt drei Antriebskolben 10,11 u.12 auf eine einzige Verschlußnadel 2 wirkend vorgesehen ist, ist beim Ausführungsbeispiel nach Fig.2 dargestellt, daß die Antriebskolben 10 u.11 jeweils mehrere parallel zueinander angeordnete Kolbenstangen 8 und demgemäß mehrere Verschlußnadeln 2 gleichzeitig beaufschlagen. Selbstverständlich könnten aber auch bei dieser Ausführungsform noch mehr als zwei Kolben koaxial zueinander und auf die jeweils durchgehenden oder einstückigen Kolbenstangen 8 wirkend vorgesehen sein. Dies ist vor allem auch deshalb möglich, weil die Kolbenstangen 8 wie beim Ausführungsbeispiel nach Fig.1 jeweils mehrere als Gleitführungen wirkende Durchtrittsöffnungen 15 von Zylinderböden 13 durchsetzen und/oder noch einen Überstand 16 zur Führung in einem Zylinderabschluß 17 haben und somit trotz der relativ großen Kolbenfläche bei relativ geringer Kolbenlänge gut geführt sind und nicht verkippt werden können, selbst wenn die von ihnen betätigten Verschlußnadeln 2 durch den Gießwerkstoff einseitig belastet werden. Somit können auch auf sehr engem Raum liegende Verschlußnadeln 2 in vorteilhafter Weise mit großer Kraft angetrieben werden, selbst wenn als Druckmedium nur Luft relativ geringen Druckes zur Verfügung steht. Entweder können dabei sehr dicht nebeneinanderliegende einzelne Düsen 1 oder aber auch - wie in Fig.2 angedeutet - eine mehrere Verschlußnadeln 2 aufweisende Mehrfachdüse betätigt werden. In all diesen Fällen kann also eine Spritzgießform sehr nah beieinanderliegende Einzelformen für zum Beispiel kleine Teile enthalten und dennoch präzise befüllt werden, wobei die Gefahr, daß es bei einer derartigen Vielzahl von Verschlußnadeln 2 zu Störungen durch verkippende Kolbenstangen 8 und sich verkantende Antriebskolben kommt, praktisch ausgeschlossen ist.

Aufgrund der guten und stabilen Führung der Kolbenstange 8 ist es auch möglich, daß in beiden Ausführungsbeispielen das Nadelende 7 der Verschlußnadel 2 koaxial in eine Aussparung oder Lochung 22 der Kolbenstange 8 paßt und darin formschlüssig aber lösbar befestigt ist. Beim Ausführungsbeispiel nach Fig.1 ist zu diesem Zweck noch ein Zwischenstück 23 vorgesehen.

Man erkennt jedoch, daß die Lochung 22, die in diesem Falle zentral und konzentrisch in der Kolbenstange 8 angeordnet ist, bis über den von der Nadel 2 am weitesten entfernten Kolben 10 hinausführt und eine nach außen gerichtete Mündung hat, von welcher aus das Ende 7 der Verschlußnadel 2 - eventuell über den Zwischenkörper 23 - erreichbar ist, so daß die Verschlußnadel 2 durch die Lochung 22 der Kolbenstange 8 herausziehbar und demontierbar ist. Ebenso kann durch diese Lochung 22 dann eine neue Verschlußnadel 2 eingesetzt werden, wenn ein Auswechseln der Verschlußnadel 2 aus Verschleißgründen oder wegen einer Beschädigung erforderlich ist. Das völlige Demontieren der Nadelverschluß-Düse 1 mit dem zugehörigen Zeitaufwand wird also vermieden.

In beiden Ausführungsbeispielen erkennt man ferner, daß die durch die Kolbenstange 8 durchgehende Lochung 22 zur Aufnahme und zum Demontieren der Verschlußnadel 2 bzw. des Zwischenkörpers 23 einen an ihrem der Verschlußnadel 2 abgewandten Ende anbringbaren Verschluß, im Ausführungsbeispiel einen als Schraube 24 ausgebildeten Schraubverschluß, aufweist, dessen nach innen gerichtete Stirnseite gleichzeitig den mittelbaren oder unmittelbaren Anschlag für das Ende 7 der Verschlußnadel 2 bildet, wobei im Ausführungsbeispiel zwischen diesem Ende 7 und der Stirnseite der Schraube 24 noch der erwähnte Zwischenkörper 23 angeordnet ist.

Das stirnseitige Ende der Verschlußnadel oder des Zwischenkörpers 23 kann dabei eine in Fig.2 angedeutete Lochung 25 mit einer Hinterschneidung oder einem Innengewinde haben, und in diese Lochung 25 kann von außen her nach Entfernen der Verschlußschraube 24 ein Werkzeug eingesetzt werden, das in die Lochung oder deren Gewinde paßt, um den Zwischenkörper 23 mit der Verschlußnadel 2 in axialer Richtung durch die Kolbenstange 8 hindurch herausziehen zu können. Dabei ist selbstverständlich die Verschlußnadel 2 und/oder der Zwischenkörper 23 in oder an der Lochung 22 der Kolbenstange 8 in Gebrauchsstellung derart gekuppelt, daß deren Verschlußnadel der Hin- und Herbewegung der Kolbenstange 8 im normalen Betrieb jeweils folgt. Beispielsweise genügt dafür schon ein Klemmsitz oder es könnte eine Verschraubung oder dergleichen vorhanden sein.

Insgesamt ergibt sich eine sehr einfache Konstruktion der gesamten Düse 1, obwohl eine Mehrzahl von Antriebskolben koaxial hintereinander vorgesehen wird, um eine große Verschlußkraft trotz geringen Druckes des Druckmediums zu erzielen. Insbesondere die durchgehende Kolbenstange 8 mit ihrer mehrfachen Gleitführung stabilisiert dabei die gesamte Anordnung derart, daß nicht nur zwei oder drei, sondern gegebenenfalls sogar vier Kolben hintereinander angewendet werden könnten oder auch die Mehrfachkolben ihrerseits gleichzeitig mehrere Kolbenstangen und Verschlußnadeln 2 bedienen können. Trotz dieses scheinbar vergrößerten mechanischen Aufwandes ist eine sehr einfache Auswechslung der Verschlußnadeln 2 möglich, weil die Kolbenstange 8 durchgehend ist und demgemäß eine durchgehende Entnahmeöffnung für die Verschlußnadel 2 haben kann.

Die Nadelverschluß-Düse 1 mit einem Kolbenantrieb 9 für Spritzgießformen hat mehrere koaxial zueinander angeordnete, auf dieselbe Verschlußnadel 2 wirkende Antriebskolben 10,11 u.evtl.12, wobei diese Antriebskolben an einer gemeinsamen, durchgehenden, insbesondere einstückigen Kolbenstange 8 befestigt sind und diese Kolbenstange 8 jeweils einen Boden 13 der einzelnen Zylinder für die Kolben durchsetzt und in den Durchtrittsöffnungen 15 dieser Zylinderböden 13 gleitend geführt ist, so daß die Kolbenstange mindestens zwei Gleitführungen hat und dadurch gegen ein Verkippen gesichert ist.

## Patentansprüche

1. Nadelverschluß-Düse (1) mit Kolbenantrieb (9) für Spritzgußformen, insbesondere für Mehrfachformen, bei welcher in dem Zuführweg (3) für den flüssigen Gießwerkstoff im Bereich des Übertrittes in die Spritzgußform eine axial in Schließstellung und in Öffnungsstellung hin- und herbewegbare Verschlußnadel (2) vorgesehen und an dem dem Dichtbereich (6) entgegengesetzten Nadelende (7) eine Kolbenstange (8) eines unmittelbar koaxial zu der Verschlußnadel (2) bewegbaren ersten Antriebskolbens (10) für diese angeordnet ist und bei der koaxial zu dem ersten Antriebskolben (10) ein zweiter Antriebskolben (11) ebenfalls auf die Verschlußnadel (2) wirkend vorgesehen ist, wobei der Kolbenantrieb (9) der Verschlußnadel (2) mit Preßluft geringen Druckes von zum Beispiel etwa 4 bis sechs bar beaufschlagbar ist, **dadurch gekennzeichnet,** daß die gemeinsam auf die Verschlußnadel (2) wirkenden Antriebskolben an einer gemeinsamen durchgehenden Kolbenstange (8) befestigt ist, daß die Kolbenstange (8) jeweils einen Boden (13) der die einzelnen Kolben (10, 11; 12) enthaltenden, in Vorschubrichtung koaxial hintereinander angeordneten Zylinderkammern (14) durchsetzt und in den Durchtrittsöffnungen (15) der Böden (13) gleitend geführt ist, und daß eine Lochung (22) bis über den von der Nadel (2) am weitesten entfernten Kolben (10) hinaus führt und eine nach außen gerichtete Mündung hat, von welcher aus das Ende (7) der Verschlußnadel (2) erreichbar ist, und daß die Verschlußnadel (2) durch die Lochung (22) der Kolbenstange (8) herausziehbar und demontierbar ist.

2. Nadelverschluß-Düse nach Anspruch 1, dadurch gekennzeichnet, daß die Kolbenstange (8) wenigstens so viele Gleitführungen hat, wie Antriebskolben mit ihr verbunden und Zylinderkammern (14) für diese Antriebskolben axial hintereinander angeordnet sind.

3. Nadelverschluß-Düse nach Anspruch 1 oder 2, dadurch gekennzeichnet, daß die Kolbenstange (8) einstückig ausgebildet ist.

4. Nadelverschluß-Düse nach einem der Ansprüche 1 bis 3, dadurch gekennzeichnet, daß die Kolbenstange (8) den von der Verschlußnadel (2) am weitesten abliegenden Kolben (10) mit einem Überstand (16) überragt und der Überstand (16) in dem Zylinderdeckel oder -abschluß (17) geführt ist.

5. Nadelverschluß-Düse nach einem der Ansprüche 1 bis 4, dadurch gekennzeichnet, daß einer der Antriebskolben, insbesondere der der Verschlußnadel (2) am weitesten abgewandte erste Antriebskolben (10), mit der Kolbenstange (8) einstückig verbunden ist.

6. Nadelverschluß-Düse nach einem dar Ansprüche 1 bis 5, dadurch gekennzeichnet, daß der/die weiteren Antriebskolben oder alle Antriebskolben mit Hilfe eines Sprengringes oder eines Seegerringes (18) an der Kolbenstange (8) in axialer Richtung befestigt sind.

7. Nadelverschluß-Düse nach einem der Ansprüche 1 bis 6, dadurch gekennzeichnet, daß der/die Kolben (10,11;12) in der einen axialen Verstellrichtung an Durchmesservergrößerungen (19) der Kolbenstange und in der entgegengesetzten Richtung an einem Sprengring oder Seegerring (18) anliegen, und einerseits zwischen der Durchmesservergrößerung (19) der Kolbenstange und andererseits dem Ring festgelegt oder eingespannt sind.

8. Nadelverschluß-Düse nach einem der Ansprüche 1 bis 7, dadurch gekennzeichnet, daß für die Zufuhr des Druckmediums, insbesondere der Druckluft, in dem Kolbengehäuse und den Zylinderwandungen jeweils an der Oberseite der Kolben mündende Kanäle (20) vorgesehen sind.

9. Nadelverschluß-Düse nach einem der Ansprüche 1 bis 8, dadurch gekennzeichnet, daß für die Rückstellung des Kolbenantriebes (9) an der Unterseite der Kolben durch die Zylinderwände verlaufende Kanäle (21) für Druckmedium oder Druckluft münden.

10. Nadelverschluß-Düse nach einem der Ansprüche 1 bis 9, dadurch gekennzeichnet, daß zusätzlich zu dem ersten und dem weiteren Antriebskolben wenigstens ein dritter Antriebskolben vorgesehen ist und in einer axial hinter den übrigen Zylinderkammern angeordneten eigenen abgeschlossenen und abgedichteten Zylinderkammer mit Luftzufuhr verschiebbar und mit der Kolbenstange verbunden angeordnet ist.

11. Nadelverschluß-Düse mit Kolbenantrieb nach einem der Ansprüche 1 bis 10, dadurch gekennzeichnet, daß die Antriebskolben (10,11) jeweils mehrere parallel zueinander angeordnete Kolbenstangen (8) und demgemäß mehrere Verschlußnadeln (2) gleichzeitig beaufschlagen.

12. Nadelverschluß-Düse nach einem der Ansprüche 1 bis 11, dadurch gekennzeichnet, daß das Ende (7) der Verschlußnadel (2) koaxial in eine Aussparung oder Lochung (22) der Kolbenstange (8) paßt und darin formschlüssig aber lösbar befestigt ist.

13. Nadelverschluß-Düse nach einem der Ansprüche 1 bis 12, dadurch gekennzeichnet, daß die Lochung (22) zentral und konzentrisch in der Kolbenstange (8) angeordnet ist.

14. Nadelverschluß-Düse nach einem der Ansprüche 1 bis 13, dadurch gekennzeichnet, daß die durch die Kolbenstange (8) durchgehende Lochung (22) zur Aufnahme und zum Demontieren der Verschlußnadel (2) einen an ihrem der Verschlußnadel (2) abgewandten Ende anbringbaren Verschluß, vorzugsweise einen Schraubverschluß, insbesondere eine als Verschluß dienende Schraube (24), aufweist, deren nach innen gerichtete Stirnseite gleichzeitig den axialen Anschlag für das Ende (7) der Verschlußnadel (2) bildet.

15. Nadelverschluß-Düse nach einem der Ansprüche 1 bis 14, dadurch gekennzeichnet, daß das stirnseitige Ende der Verschlußnadel oder eines Zwischenkörpers (23) mit Hinterschneidung oder Gewinde eine Gewindelochung hat, in welche von außen her durch die Lochung der Kolbenstange ein ein Gegenstück oder Gegengewinde aufweisendes Werkzeug oder eine Zugschraube einsetzbar ist, womit die Verschlußnadel in axialer Richtung durch die Kolbenstange (8) herausziehbar ist.

16. Nadelverschluß-Düse nach einem der Ansprüche 1 bis 15, dadurch gekennzeichnet, daß die Verschlußnadel (2) in oder an der Lochung (22) der Kolbenstange (8) in Gebrauchsstellung derart gekuppelt ist, daß sie mit dieser rückziehbar ist.

## Claims

1. A needle valve nozzle (1) with piston drive (9) for injection moulds, particularly for multi-cavity moulds, wherein a valve needle (2) axially reciprocable between a closed position and an open position is provided in the feed path (3) for the liquid moulding material in the region of the transition into the injection mould and arranged at the needle end (7) opposite the sealing zone (6) is a piston rod (8) of a movable first drive piston (10) located directly coaxially to, and acting on, the valve needle (2), and provided coaxially to the first drive piston (10) there is a second drive piston (11) likewise acting on the valve needle (2), wherein the piston drive ()) for the valve needle (2) can be subjected to compressed air of low pressure, for example of about 4 to 6 bar, **characterized in that** the drive pistons acting in common on the valve needle (2) are fixed to a common, throughgoing piston rod (8), and that the piston rod (8) in each case passes through a floor (13) of the cylinder chambers (14) which contain the individual pistons (10, 11; 12) and are arranged coaxially one behind the other in the forward feed direction, said piston rod (8) being slidably guided in the passage openings (15) in the floors (13), and that an aperture (22) extends beyond the piston (10) furthest removed from the needle (2) and has an outwardly directed opening affording access to the end (7) of the valve needle (2), and that the valve needle (2) is adapted to be pulled out and disassembled via the aperture (22) in the piston rod (8).

2. A needle valve nozzle as claimed in claim 1, characterized in that the piston rod (8) has sliding guides of a number at least as great as that of drive pistons connected thereto and that of cylinder chambers (14) arranged axially one behind the other for said drive pistons.

3. A needle valve nozzle as claimed in claim 1 or claim 2, characterized in that the piston rod (8) is of integral design.

4. A needle valve nozzle as claimed in any one of claims 1 to 3, characterized in that the piston rod (8) has a projecting portion (16) which projects past the piston (10) most remote from the valve needle (2) and is guided in the cylinder lid or closure (17).

5. A needle valve nozzle as claimed in any one of claims 1 to 4, characterized in that one of the drive pistons, particularly the first drive piston (10) most remote from the valve needle (2), is integral with the piston rod (8).

6. A needle valve nozzle as claimed in any one of claims 1 to 5, characterized in that the further drive piston(s) or all the drive pistons are fixed axially to the piston rod (8) with the aid of a snap ring or Seeger circlip ring (18).

7. A needle valve nozzle as claimed in any one of claims 1 to 6, characterized in that the piston(s) (10, 11; 12) lie in the one direction of axial travel against increased diameter sections (19) of the piston rod and in the opposite direction against a snap ring or Seeger circlip ring (18), and are fixed or restrained between the increased diameter section (19) of the piston rod on the one hand and the fixing ring (18) on the other hand.

8. A needle valve nozzle as claimed in any one of claims 1 to 7, characterized in that for the supply of the pressure medium, particularly the compressed air, the piston housing and the cylinder walls are provided with channels (20) terminating at the upper side of the respective pistons.

9. A needle valve nozzle as claimed in any one of claims 1 to 8, characterized in that channels (21) for pressure medium or compressed air for returning the piston drive (9) extend through the cylinder walls and terminate at the underside of the pistons.

10. A needle valve nozzle as claimed in any one of claims 1 to 9, characterized in that in addition to the first and the further drive piston at least a third drive piston is provided arranged in a separate closed and sealed cylinder chamber disposed axially behind the other cylinder chambers, said third drive piston being movable by the supply of air and connected to the piston rod.

11. A needle valve nozzle with piston drive as claimed in any one of claims 1 to 10, characterized in that the drive pistons (10, 11) in each case simultaneously act upon a plurality of mutually parallel piston rods (8) and accordingly upon a plurality of valve needles (2).

12. A needle valve nozzle as claimed in any one of claims 1 to 11, characterized in that the end (7) of the valve needle (2) fits coaxially into a recess or aperture (22) in the piston rod (8) and is fixed positively but releasably therein.

13. A needle valve nozzle as claimed in any one of claims 1 to 12, characterized in that the aperture (22) is arranged centrally and concentrically in the piston rod (8).

14. A needle valve nozzle as claimed in any one of claims 1 to 13, characterized in that the aperture (22) passing through the piston rod (8) and serving to receive and disassemble the valve needle (2) has a closure, preferably a screw plug, particularly a screw (24) serving as closure, adapted to be applied to the aperture-end remote from the valve needle (2), the inwardly directed end face of said screw simultaneously constituting the axial stop for the end (7) of the valve needle (2).

15. A needle valve nozzle as claimed in any one of claims 1 to 14, characterized in that the front end of the valve needle or of an intermediate body (23) has an undercut or threaded aperture (25) into which a tool having a mating part or mating thread, or a draw bolt, can be inserted from the outside through the aperture of the piston rod, by means of which valve needle can be pulled out in the axial direction through the piston rod (8).

16. A needle valve nozzle as claimed in any one of claims 1 to 15, characterized in that in the position of use the valve needle (2) is coupled in or on the aperture (22) of the piston rod (8) in such a way as to be retractable therewith.

## Revendications

1. Buse (1) à fermeture à aiguille avec entraînement (9) à pistons pour des moules pour coulage par injection, notamment pour des moules à plusieurs cavités, selon laquelle une aiguille de fermeture (2), déplaçable axialement en va-et-vient en position de fermeture et en position d'ouverture, est prévue dans le parcours d'alimentation (3) du matériau coulé liquide, dans la région du déversement dans le moule, et une tige de piston (8) d'un premier piston d'entraînement (10) pour l'aiguille de fermeture (2), lequel est déplaçable directement coaxialement à cette dernière, est disposée à l'extrémité (7) de l'aiguille qui est opposée à la région d'étanchéité (6), et selon laquelle un deuxième piston d'entraînement (11), agissant également sur l'aiguille de fermeture (2), est prévu coaxialement au premier piston d'entraînement (10), l'entraînement (9) à pistons sollicitant l'aiguille de fermeture (2) avec de l'air comprimé sous une faible pression de, par exemple, environ quatre à six bars, **caractérisée** en ce que les pistons d'entraînement agissant conjointement sur l'aiguille de fermeture (2) sont fixés sur une tige de piston traversante commune (8), en ce que la tige de piston (8) traverse le fond (13) de chacune des chambres de cylindres (14) disposées coaxialement à la suite les unes des autres dans la direction de poussée et contenant les différents pistons (10, 11 ; 12), et est guidée en coulissement dans les ouvertures de passage (15) des fonds (13), en ce qu'un perçage (22) mène jusqu'au-delà du piston (10) le plus éloigné de l'aiguille (2) et possède une ouverture dirigée vers l'extérieur, par laquelle l'extrémité (7) de l'aiguille de fermeture (2) peut être atteinte, et en ce que l'aiguille de fermeture (2) peut être retirée et démontée par le perçage (22) de la tige de piston (8).

2. Buse à fermeture à aiguille selon la revendication 1, **caractérisée** en ce que la tige de piston (8) possède un nombre de guidages en glissement au moins égal au nombre de pistons d'entraînement qui lui sont reliés et de chambres de cylindres (14) qui sont disposées axialement à la suite les unes des autres pour ces pistons d'entraînement.

3. Buse à fermeture à aiguille selon la revendication 1 ou 2, **caractérisée** en ce que la tige de piston (8) est réalisée d'une seule pièce.

4. Buse à fermeture à aiguille selon l'une des revendications 1 à 3, **caractérisée** en ce que la tige de piston (8) dépasse du piston (10) le plus éloigné de l'aiguille de fermeture (2) par une extrémité dépassante (16), et l'extrémité dépassante (16) est guidée dans le couvercle ou obturateur de cylindre (17).

5. Buse à fermeture à aiguille selon l'une des revendications 1 à 4, **caractérisée** en ce qu'un des pistons d'entraînement, notamment le premier piston d'entraînement (10), le plus éloigné de l'aiguille de fermeture (2), est solidaire de la tige de piston (8).

6. Buse à fermeture à aiguille selon l'une des revendications 1 à 5, **caractérisée** en ce que l'autre/les autres pistons d'entraînement, ou tous les pistons d'entraînement, sont fixés en direction axiale sur la tige de piston (8) à l'aide d'une bague élastique ou d'un circlip (18).

7. Buse à fermeture à aiguille selon l'une des revendications 1 à 6, **caractérisée** en ce que le/les pistons (10, 11 ; 12) s'appliquent contre des augmentations de diamètre (19) de la tige de piston dans une des directions de déplacement axial, et contre une bague élastique ou un circlip (18) dans la direction opposée, et sont fixés en position ou serrés entre l'augmentation de diamètre (19) de la tige de piston d'une part, et la bague ou le circlip d'autre part.

8. Buse à fermeture à aiguille selon l'une des revendications 1 à 7, **caractérisée** en ce que des canaux respectifs (20), débouchant sur la face supérieure des pistons, sont prévus dans le corps des pistons et dans les parois des cylindres pour l'apport du fluide sous pression, notamment de l'air comprimé.

9. Buse à fermeture à aiguille selon l'une des revendications 1 à 8, **caractérisée** en ce que des canaux (21) pour le fluide sous pression ou l'air comprimé, s'étendant à travers les parois des cylindres, débouchent sur la face inférieure des pistons en vue du rappel de l'entraînement (9) à pistons.

10. Buse à fermeture à aiguille selon l'une des revendications 1 à 9, **caractérisée** en ce qu'au moins un troisième piston d'entraînement est prévu en plus du premier et du deuxième pistons d'entraînement, et il est assemblé à la tige de piston et disposé à coulissement avec apport d'air comprimé dans une propre chambre de cylindre fermée et étanchée, disposée axialement à la suite des autres chambres de cylindres.

11. Buse à fermeture à aiguille selon l'une des revendications 1 à 10, **caractérisée** en ce que les pistons d'entraînement (10, 11) sollicitent chacun simultanément plusieurs tiges de piston (8) disposées parallèlement entre elles, et donc plusieurs aiguilles de fermeture (2).

12. Buse à fermeture à aiguille selon l'une des revendications 1 à 11, **caractérisée** en ce que l'extrémité (7) de l'aiguille de fermeture (2) s'adapte coaxialement dans un évidement ou perçage (22) de la tige de piston (8), et y est fixée par engagement positif mais de façon amovible.

13. Buse à fermeture à aiguille selon l'une des revendications 1 à 12, **caractérisée** en ce que le perçage (22) est disposé centralement et concentriquement dans la tige de piston (8).

14. Buse à fermeture à aiguille selon l'une des revendications 1 à 13, **caractérisée** en ce que le perçage (22) traversant la tige de piston (8) pour recevoir et pour démonter l'aiguille de fermeture (2) présente un obturateur pouvant être installé à son extrémité opposée à l'aiguille de fermeture (2), de préférence un obturateur vissé, notamment une vis (24) servant d'obturateur, dont la face frontale dirigée vers l'intérieur constitue simultanément la butée axiale pour l'extrémité (7) de l'aiguille de fermeture (2).

15. Buse à fermeture à aiguille selon l'une des revendications 1 à 14, **caractérisée** en ce que l'extrémité frontale de l'aiguille de fermeture ou un corps intermédiaire (23) à contre-dépouille ou filetage possède un trou taraudé dans lequel peut être inséré de l'extérieur, par le perçage de la tige de piston, un outil présentant un pendant ou filetage complémentaire, ou une vis d'extraction, avec quoi l'aiguille de fermeture peut être retirée en direction axiale à travers la tige de piston (8).

16. Buse à fermeture à aiguille selon l'une des revendications 1 à 15, **caractérisée** en ce que l'aiguille de fermeture (2) est, en position d'utilisation, accouplée au ou dans le perçage (22) de la tige de piston (8) de telle sorte qu'elle peut être rappelée avec cette dernière.
